# EUROPEAN PATENT APPLICATION

(11) **EP 1 755 114 A1**
(43) Date of publication of application: **21.02.2007**
(21) Application number: 05748893.4
(22) Date of filing: 07.06.2005
(51) Int. Cl.: G11B 7/007, G11B 7/004, G11B 7/24, G11B 20/10, G11B 20/12

(54) **INFORMATION RECORDING MEDIUM**

(30) Priority: 07.06.2004 JP 2004168546
(71) Applicant: PIONEER ELECTRONIC CORPORATION, Meguro-ku Tokyo 153-6654 (JP)
(72) Inventor: KURODA, Kazuo, c/o PIONEER CORPORATION, Tokorozawa-shi, Saitama 3598522 (JP)
(74) Representative: Viering, Jentschura & Partner
(86) International application number: PCT/JP2005/010400
(87) International publication number: WO 2005/122154

(57) **Abstract**

An information recording medium is provided with a recording information recording area (102) wherein recording information can be recorded, and an encrypting information recorded area (CDZ) wherein encrypting information (Key 1) for encrypting the recording information is previously recorded. The encrypting information recorded area includes a special area (CDZa) having a physical structure different from that of the recording information recording area at least on one part.

## Description

### Technical Field

The present invention relates to an information recording medium, such as a DVD, for example.

### Background Art

A patent document 1 or the like discloses a distribution system for recording encryption key (i.e., encryption information or encrypting information) in advance onto a record-type information recording medium, such as a DVD-R/RW, selling it, and distributing encrypted DVD video contents (hereinafter referred to as "encrypted contents", as occasion demands) through a network. In this distribution system, the encryption key applied to read-only type media, such as a conventional DVD-ROM, is pre-recorded before sales in a control area, such as a control data zone, on an information recording medium having the same physical structure as that of the record-type information recording medium, such as the conventional DVD-R/RW.

Patent document 1: Japanese Patent Application Laid Open NO. 2001-307427
Patent document 2: Japanese Patent Application Laid Open NO. 2001-357001
Patent document 3: Japanese Patent Application Laid Open NO. 2000-331412
Non-patent document 1: "Protection of DVD contents", Toshiba review, Vol.58, No.6 (2003)

### Disclosure of Invention

### Subject to be Solved by the Invention

In the above-mentioned patent document 1, however, there is no special ingenuity or innovation with regard to the record-type information recording medium, and the same encryption key as in the read-only type DVD (DVD-ROM) is pre-recorded in the recording area having the same physical structure as that of the conventional record-type information recording medium. Thus, if an illegal record type-DVD disc is prepared on which even the encryption key, which is normally pre-recorded and protected in the commercially available DVD disc, is copied by some means (hereinafter referred to as an "illegal record type-DVD disc", as occasion demands), there is such a technical problem that it is hardly possible to distinguish it from a record-type DVD disc on which the encryption key is recorded under a legal encryption system (hereinafter referred to a "legal record-type DVD disc", as occasion demands).

Moreover, in the existing rules about the reproduction or recording of encrypted contents, it is not recommended that the encryption key, such as a disk key, is recorded on the record-type DVD disc. Therefore, on an information recording / reproducing apparatus, when the type of media is judged by a seek operation or the like in order to obtain control information, it is detected whether or not there is wobble formed on the record-type information recording medium. There is also invented a method of distinguishing the legal record-type DVD disc and the illegal record-type DVD disc on the basis of the detection of the wobble; however, there is also such a technical problem that the both discs cannot be accurately distinguished.

It is therefore an object of the present invention to provide an information recording medium capable of increasing the confidentiality of the encryption key for encrypting contents, on the record-type information recording medium.

### Means for Solving the Subject

### (Information Recording Medium)

Hereinafter, the information recording medium of the present invention will be explained.

The above object of the present invention can be achieved by an information recording medium, provided with: a record information recording area in which record information can be recorded; and an encryption key recording area in which encryption key (i.e., encryption information) for encrypting the record information is pre-recorded in advance, the encryption key recording area including a special area having a physical structure different from that of the record information recording area, in at least a portion of the encryption key recording area.

According to the information recording medium of the present invention, the encryption key recording area includes the special area having the physical structure different from that of the record information recording area. Thus, at least in the special area, it is hardly possible or completely impossible to overwrite unexpected information, such as illegal encryption key, by using a general information recording apparatus. In addition, it is also hardly possible or completely impossible to alter the encryption key to the unexpected information, such as the illegal encryption key, by using the general information recording apparatus.

If the illegal record-type DVD disc is prepared on which even the encryption key, which is normally pre-recorded and protected in the commercially available DVD disc, is copied by some means, there is a possibility that it is hardly possible to distinguish it from the record-type DVD disc on which the encryption key is recorded under the legal encryption system.

In contrast, according to the present invention, the encryption key recording area includes the special area having the physical structure different from that of the record information recording area. Thus, at least in the special area, it is hardly possible or completely impossible to overwrite the unexpected information, such as the illegal encryption key, by using the general information recording apparatus, and it is also hardly possible or completely impossible to alter the encryption key to the unexpected information, such as the illegal encryption key, by using the general information recording apparatus.

As a result, it is possible to highly maintain the confidentiality of the encryption key pre-recorded in advance in the encryption key recording area; namely, it is possible to set a secure condition. Thus, it is hardly possible or completely impossible to prepare or manufacture the record-type information recording medium on which the encryption key is illegally copied.

Moreover, out of commercially available information recording apparatuses, such as DVD players, there is an apparatus for detecting a physical parameter peculiar to the information recording medium, in order to judge the type of the information recording medium. According to the present invention, however, it is also possible to receive such a benefit that a supplier of the encrypted content can almost or completely check the legality when the distributed encrypted contents are recorded onto the information recording medium, without depending on the performance and the function of the information recording apparatus.

Moreover, even if the encrypted contents are recorded on a hybrid type optical disc provided with (i) a recordable recording area similar to the case of a record-type information recording medium, such as a DVD-R/RW, and (ii) a read-only recording area similar to the case of a read-only type optical disc, such as a DVD-ROM, there is a possibility that the encryption key is not accurately obtained, with the confidentiality thereof maintained, by an information recording / reproducing apparatus. Thus, there is a possibility that the encrypted contents cannot be decoded and cannot be reproduced by the information recording / reproducing apparatus. According to the present invention, however, it is also possible to receive such a benefit that it is possible to highly maintain, in a uniform way, the confidentiality of the encryption key recorded in the encryption key recording area without depending on a difference between the recordable recording area and the read-only recording area.

In one aspect of the information recording medium of the present invention, wobble is formed in the record information recording area by that a recording track to record thereon the record information meanders, and wobble is not formed in the special area by that a recording track to record thereon the encryption key does not meander.

According to this aspect, the encryption key recording area includes the special area in which the wobble is not formed, which is different from the record information recording area. Thus, at least in the special area, a recording clock and a recording address are not obtained on the basis of a signal from the wobble by the general information recording apparatus. Thus, it is hardly possible or completely impossible to overwrite the unexpected information, such as the illegal encryption key, and it is hardly possible or completely impossible to alter the encryption key to the unexpected information.

As a result, it is possible to highly maintain the confidentiality of the encryption key pre-recorded in the encryption key recording area; namely, it is possible to set a secure condition. Thus, it is hardly possible or completely impossible to prepare or manufacture the record-type information recording medium on which the encryption key is illegally copied. Moreover, it is possible to distinguish the legal record-type information recording medium and the illegal record-type information recording medium, accurately and quickly, by whether or not the wobble is detected in the special area, which is at least a portion of the encryption key recording area, on the generate information recording apparatus. In addition, it is also possible to partially comply with the existing rules about the reproduction or the recording of the encrypted contents, by not forming the wobble in the special area which is at least a portion of the encryption key recording area.

Incidentally, even with respect to the special area in which the wobble is not formed, if the information recording apparatus is used which can control the number of rotations without using the wobble, it is possible to record the encryption key as the pre-recorded information, by using laser light. Alternatively, if the encryption key is recorded into the special area by using embossed pits, the wobble is unnecessary in the special area.

In another aspect of the information recording medium of the present invention, first wobble is formed in the record information recording area by that a recording track to record thereon the record information meanders, and second wobble in which at least one of frequency, amplitude, and phase is different from those of the first wobble formed in the record information recording area, is formed in the special area by that a recording track to record thereon the encryption key meanders.

According to this aspect, the encryption key recording area includes the special area in which the second wobble in which at least one of frequency, amplitude, and phase is different from those of the first wobble formed in the record information recording area is formed. Thus, at least in the special area, the accurate recording clock and recording address are not obtained on the basis of the signal from the second wobble by the general information recording apparatus. Thus, it is hardly possible or completely impossible to overwrite the unexpected information, such as the illegal encryption key, or it is hardly possible or completely impossible to alter the encryption key to the unexpected information. In particular, the special area may be random-modulated in which a plurality of parameters out of the frequency, amplitude, and phase of the second wobble are modulated.

As a result, it is possible to highly maintain the confidentiality of the encryption key pre-recorded in the encryption key recording area; namely, it is possible to set a secure condition. Thus, it is hardly possible or completely impossible to prepare or manufacture the record-type information recording medium on which the encryption key is illegally copied.

In another aspect of the information recording medium of the present invention, wobble is formed in the record information recording area by that a recording track to record thereon the record information meanders, and the encryption key is recorded in the special area by using embossed pits.

According to this aspect, the encryption key recording area includes the special area in which the encryption key is recorded as the embossed pits.
Thus, at least in the special area in which the embossed pits are formed, it is hardly possible or completely impossible to overwrite the unexpected information, such as the illegal encryption key, or it is hardly possible or completely impossible to alter the encryption key to the unexpected information.

As a result, it is possible to highly maintain the confidentiality of the encryption key pre-recorded in the encryption key recording area; namely, it is possible to set a secure condition. Thus, it is hardly possible or completely impossible to prepare or manufacture the record-type information recording medium on which the encryption key is illegally copied.

According to this aspect, it may be constructed such that a land track and a groove track are alternately formed in the record information recording area as the recording track, and land pre-pits carrying predetermined types of pre-information are formed in advance on the land track, and that the land pre-pits are not recorded in the special area.

By virtue of such construction, it is possible to highly maintain the confidentiality of the encryption key pre-recorded in the encryption key recording area; namely, it is possible to set a secure condition. Thus, it is hardly possible or completely impossible to prepare or manufacture the record-type information recording medium on which the encryption key is illegally copied.

Moreover, according to this aspect, it may be constructed such that the land track and the groove track are formed in the special area.

By virtue of such construction, while preventing the complexity of a process of manufacturing the information recording medium, it is possible to highly maintain the confidentiality of the encryption key pre-recorded in the encryption key recording area; namely, it is possible to set a secure condition. Thus, it is hardly possible or completely impossible to prepare or manufacture the record-type information recording medium on which the encryption key is illegally copied.

According to this aspect, it may be constructed such that a land track and a groove track are alternately formed in the record information recording area as the recording track, and that the land track and the groove track are not recorded in the special area.

By virtue of such construction, it is possible to highly maintain the confidentiality of the encryption key pre-recorded in the encryption key recording area; namely, it is possible to set a secure condition. Thus, it is hardly possible or completely impossible to prepare or manufacture the record-type information recording medium on which the encryption key is illegally copied.

In another aspect of the information recording medium of the present invention, the encryption key recording area is all constructed from the special area.

According to this aspect, it is possible to highly maintain the confidentiality of the encryption key pre-recorded in the encryption key recording area; namely, it is possible to set a secure condition. Thus, it is hardly possible or completely impossible to prepare or manufacture the record-type information recording medium on which the encryption key is illegally copied.

In another aspect of the information recording medium of the present invention, it is further provided with a control information recording area (e.g. a control data zone) in which control information about reproduction and recording control can be recorded, at least one of start address information and end address information being recorded in the control information recording area, the start address information indicating a start position of the special area, the end address information indicating an end position of the special area.

According to this aspect, by virtue of the initial operation of the general information recording apparatus, for example, at least one of the start address information and the end address information is obtained, wherein the start address information indicates the start position of the special area recorded in the control information recording area and the end address information indicates the end position of the special area. Therefore, it is possible to quickly identify the position of the special area by the information recording apparatus.

As a result, by that the information recording apparatus identifies the physical structure in the special area which is at least a portion of the encryption key recording area, it is possible to distinguish the legal record-type information recording medium and the illegal record-type information recording medium, accurately and quickly.

In another aspect of the information recording medium of the present invention, pre-format address information is recorded in at least one of the record information recording area and the encryption key recording area, and at least one of start address information and end address information is appended to the pre-format address information, the start address information indicating a start position of the special area, the end address information indicating an end position of the special area.

According to this aspect, at least one of the start address information and the end address information, appended to the pre-format address information in at least one of the record information recording area and the encryption key recording area, is obtained by the general information recording apparatus, wherein the start address information indicates the start position of the special area and the end address information indicates the end position of the special area. Therefore, it is possible to quickly identify the position of the special area by the information recording apparatus.

As a result, by that the information recording apparatus identifies the physical structure in the special area which is at least a portion of the encryption key recording area, it is possible to distinguish the legal record-type information recording medium and the illegal record-type information recording medium, accurately and quickly.

In another aspect of the information recording medium of the present invention, the encryption key is information for further encrypting another encryption key which is to encrypt the record information, and the another encryption key is recorded into the record information recording area together with the record information.

According to this aspect, it is possible to make the correlation of the encryption key, such as an encryption key, in a hierarchy structure. Therefore, it is possible to establish a highly convenient encryption system in which an owner of copyright and a disc manufacturer or the like can arbitrarily set the encryption key.

These effects and other advantages of the present invention become more apparent from the following embodiment.

As explained above, according to the information recording medium of the present invention, it is provided with the record information recording area and the encryption key recording area, and the special area having the different physical structure. Thus, it is possible to highly maintain the confidentiality of the encryption key pre-recorded in the encryption key recording area.

### Brief Description of Drawings

[FIG. 1] FIG. 1 is a substantial plan view showing the basic structure of an optical disc having a plurality of recording areas in an embodiment of the information recording medium of the present invention in an upper part, and a schematic conceptual view showing a recording area structure in the radial direction of the optical disc in a corresponding lower part.
[FIG. 2] FIG. 2 is a partially enlarged perspective view showing a recording surface of the optical disc in the embodiment.
[FIG. 3] FIGs. 3 are schematic conceptual views showing a recording clock and recording addresses necessary in the recording, obtained from the wobbling of a groove track on the optical disc in the embodiment of the information recording medium of the present invention.
[FIG. 4] FIG. 4 is a schematic conceptual view showing one specific example of the physical structure of the recording areas of the optical disc in the embodiment of the information recording medium of the present invention.
[FIG. 5] FIGs. 5 are schematic conceptual views showing wobble signals obtained from a special area, which is at least a portion of a control data zone, in another specific example of the optical disc in the embodiment of the information recording medium of the present invention.
[FIG. 6] FIG. 6 is a schematic conceptual view showing another specific example of the physical structure of the recording areas of the optical disc in the embodiment of the information recording medium of the present invention.
[FIG. 7] FIG. 7 is a block diagram showing the entire structure of a distribution system, provided with: an information recording apparatus for performing a recording operation on the information recording medium of the present invention; and an information distributing apparatus for performing a distribution operation.
[FIG. 8] FIG. 8 is a flowchart showing a distribution process on the information recording medium, the information recording apparatus, and the information distributing apparatus of the present invention.
[FIG. 9] FIG. 9 is a block diagram showing the entire structure of an information recording / reproducing apparatus for recording / reproducing information on the information recording medium of the present invention.
[FIG. 10] FIG. 10 is a flowchart showing a flow of a reproduction operation in one specific example of the embodiment of an information reproducing apparatus of the present invention.

### Description of Reference Codes

1···center hole, 10···track, 11···sector, 100···optical disc, 101···lead-in area, 102···data area, 103···lead-out area, 106···transparent substrate, 107··· recording layer, 108···reflective film, 109···wobble, 150···OPC area, 200··· information recording apparatus, 200a···information recording / reproducing apparatus, 201···objective lens, 202···optical pickup, 203···spindle motor, 204 ···head amplifier, 210···sub generation circuit, 211···pit data demodulation circuit, 212···pit data correction circuit, 213···buffer, 214···interface, 220··· push-pull signal generation circuit, 221···low pass filter, 222···servo unit, 227 ···RAND table, 228···spread spectrum demodulation circuit, 230···spread spectrum data reproduction circuit, 250···CPU, 300···information distribution apparatus, 400···external network, SS···spread spectrum data, CK···clock signal, CK1···first clock signal, CK2···second clock signal, GT···groove track, LT···land track, LB···laser light, LPP···land pre-pit, Key1···encrypted information or encryption key (disk key / disk key set), Key2···encrypted information or encryption key (title key), CDZ···control data zone, CDZa··· special area, NBCA···Narrow Burst Cutting Area

### Best Mode for Carrying Out the Invention

Hereinafter, the best mode for carrying out the present invention will be explained in each embodiment in order with reference to the drawings.

### (Information Recording Medium)

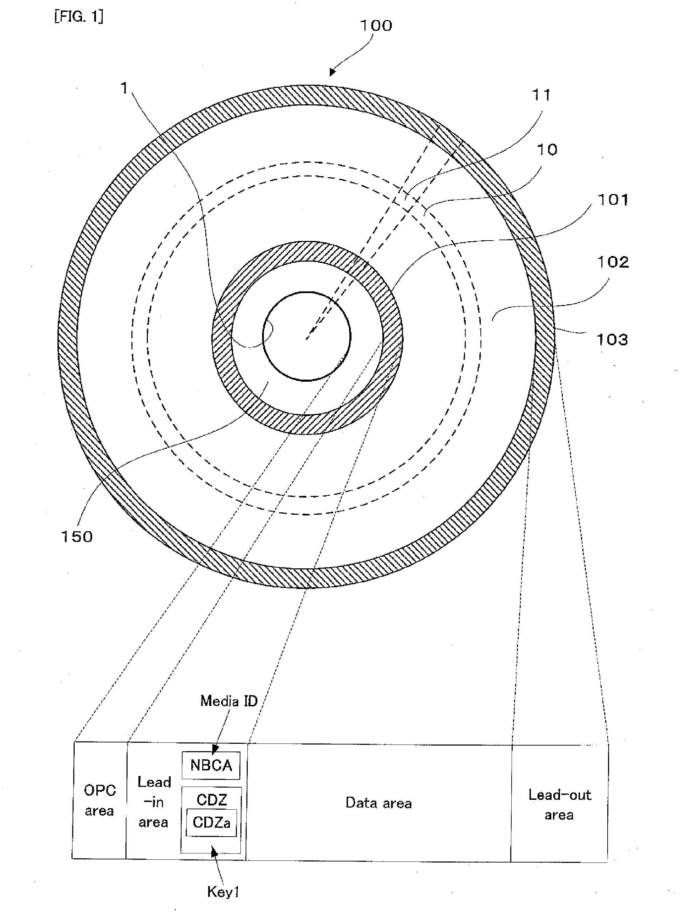

Hereinafter, an embodiment of the information recording medium of the present invention will be explained with reference to FIG. 1 to FIG. 6.

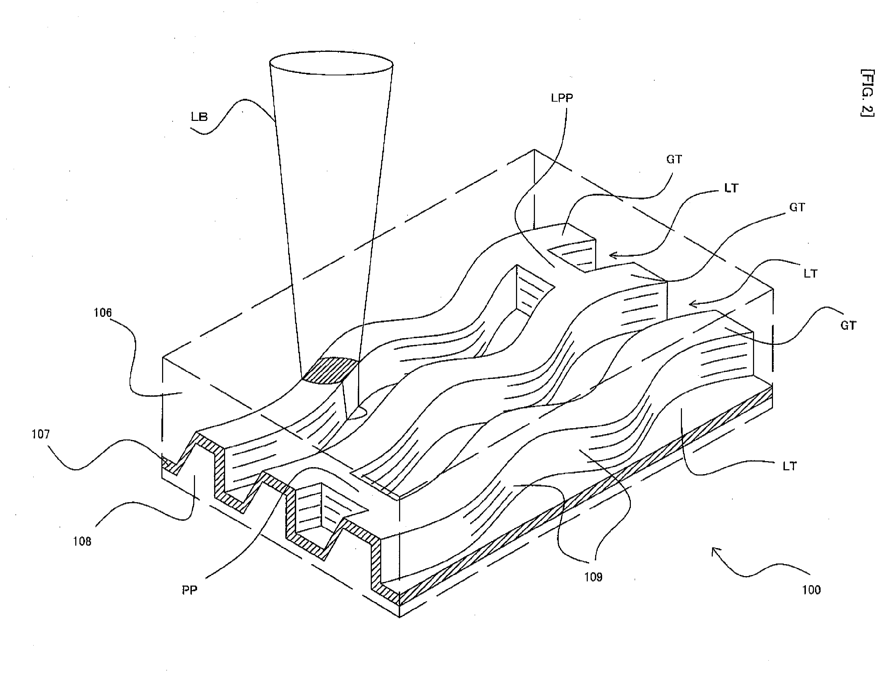

Firstly, with reference to FIG. 1 and FIG. 2, the basic structure of an optical disc, which is one specific example of information recording medium in the embodiment, will be explained. FIG. 1 is a substantial plan view showing the basic structure of an optical disc having a plurality of recording areas in an embodiment of the information recording medium of the present invention in an upper part, and a schematic conceptual view showing a recording area structure in the radial direction of the optical disc in a corresponding lower part. FIG. 2 is a partially enlarged perspective view showing a recording surface of the optical disc in the embodiment.

The information recording medium in the embodiment is a rewritable type optical disc on which recording can be performed many times and reproduction can be also performed many times, in various reversible change recording methods by heat or the like. Incidentally, as described later, the information recording medium in the embodiment may be a write-once type optical disc using an organic pigmented film.

As shown in FIG. 1, an optical disc 100 has a recording surface on a disc main body with a diameter of about 12 cm, as is a DVD. On the recording surface, the optical disc 100 is provided with: a center hole 1 as the center; an OPC area 150 in the embodiment; a lead-in area 101 as a buffer area; a data area 102; and a lead-out area 103 as another buffer area, from the inner to the outer circumferential side.

In the lead-in area 101, a control data zone CDZ is disposed. In the control data zone CDZ, there is pre-recorded encryption key Key1, such as a disk key and a disk key set, based on a predetermined encryption system, as a portion of the control information for controlling the reproduction and the recording with respect to the optical disc 100. Incidentally, the encryption key Key1, such as a disk key and a disk key set, constitutes one specific example of the "encryption key" of the present invention.

Moreover, in the lead-in area 101, a NBCA (Narrow Burst Cutting Area) is disposed. In the NBCA, a manufacturer's serial number peculiar to each optical disc 100, i.e. a media ID, is recorded by laser cutting in a barcode shape. Incidentally, one specific example of the "encryption key recording area" of the present invention is constructed from the control data zone CDZ. Moreover, the control data zone CDZ is constructed to include a special area CDZa described later.

In the data area 102, there are recorded encryption key Key2, such as a title key, based on the encryption system, and encrypted contents encrypted by the encryption key Key 2, such as a title key. More specifically, the encryption key Key 2, such as a title key, is encrypted by using the above-mentioned encryption key Key1, such as a disk key and a disk key set. Incidentally, one specific example of the "another encryption key" of the present invention is constructed from the encryption key Key 2, such as a title key. Moreover, one specific example of the "record information recording area" of the present invention is constructed from the data area 102.

The OPC area 150 is prepared for the detection of an optimum recording laser power, i.e. for the calibration of a recording laser power.

Then, in each recording area, a track or tracks 10, such as a groove track and a land track, are alternately placed, spirally or concentrically, centered on the center hole 1, for example.

As shown in FIG. 2, in the embodiment, on the optical disc 100, a pigment-type recording layer 107 constituting the information recording surface is laminated on the lower side of a disc-shaped transparent substrate 106, and moreover, a reflective layer 108 is laminated on the lower side thereof. On the information recording surface constructed from the surface of the recording layer 107, there are alternately formed a groove track GT and a land track LT. Incidentally, at the time of recording and reproduction of the optical disc 100, as shown in FIG. 2, for example, laser light LB is irradiated onto the groove track GT through the transparent substrate 106. For example, at the time of recording, the laser light LB is irradiated with a recording laser power, by which the recording is performed in the recording layer 107 in accordance with the record data. On the other hand, at the time of reproduction, the laser light LB is irradiated with a reproduction laser power, which is weaker than the recording laser power, by which the record data recorded in the recording layer 107 is read.

Incidentally, the groove track GT, the land track LT, wobble 109, and a land pre-pit LPP or the like will be explained later in detail.

In FIG. 1 again, on the track 10, the data is recorded by a unit of 1 ECC block (cluster) which is a management unit in which, e.g., 16 of sectors 11 are combined. This 1 ECC block is a management unit by pre-format address information which is error-correctable.

Incidentally, the present invention is not particularly limited to the optical disc having four recording areas, as shown in FIG. 1. For example, the OPC area 150 is not necessarily located on the innermost circumference. For example, the OPC area 150 may be located in the lead-in area 101, the data area 102, or the lead-out area 103, or the like, in FIG. 1. Alternatively, the OPC area 150 may be located between the lead-in area 101 and the data area 102, between the data area 102 and the lead-out area 103, or on the outer circumferential side of the lead-out area 103, or the like. Moreover, the presence of the lead-in area 101 and the lead-out area 103 is also arbitrary. It is only necessary to provide at least the two recording areas of the OPC area 150 in which OPC pits or an OPC pattern are recorded and the data area 102 in which the record data is recorded. In addition, the OPC area 150 is collectively disposed or divided into a plurality of areas.

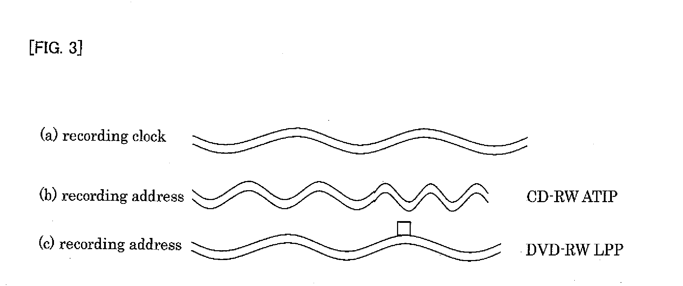

Next, with reference to the above-mentioned FIG. 2, as occasion demands, in addition to FIG. 3, an explanation will be given for a recording clock and recording addresses necessary in the recording, obtained from the wobbling or meandering of the groove track on the optical disc in the embodiment of the information recording medium of the present invention. FIGs. 3 are schematic conceptual views showing the recording clock and the recording addresses necessary in the recording, obtained from the wobbling of the groove track on the optical disc in the embodiment of the information recording medium of the present invention.

As shown in FIG. 3(a), (b), and (c), the groove track GT is wobbled, meandered or oscillated with a certain amplitude and at a certain spatial frequency, on the optical disc in the embodiment. Namely, the groove track GT is wobbled, meandered or oscillated and the cycle of the wobble 109 is set to a predetermined value. Incidentally, the pre-format address information may be recorded in advance by modulating the wobble 109 of the groove track GT in a predetermined modulation method, such as frequency modulation and phase modulation.

As shown in FIG. 3(b), in the case of a CD-R/W, the recording address on the optical disc is incorporated as absolute time information, which is referred to as an ATIP (Absolute Time In Pre-groove) signal, due to a slight change in frequency.

As shown in FIG. 3(c), in the case of a DVD-R/W, an address pit, which is referred to as a land pre-pit LPP, indicating the pre-format address information is formed on the land track LT.

By virtue of the two types of addressing explained above, i.e. the wobble 109 and the ATIP or the land pre-pit LPP, it is possible to obtain information, such as the recording address, required for (i) the recording of the data, (ii) the generation of the recording clock, and (iii) the disc rotation control during the recording. More specifically, in order that a recording drive, such as a disc drive, for example, performs writing into the data area, which constitutes one example of the "record information recording area" of the present invention, the recording clock and the recording addresses used for the writing, are required in addition to a recording parameter, such as the optimum recording laser power or a recording strategy.

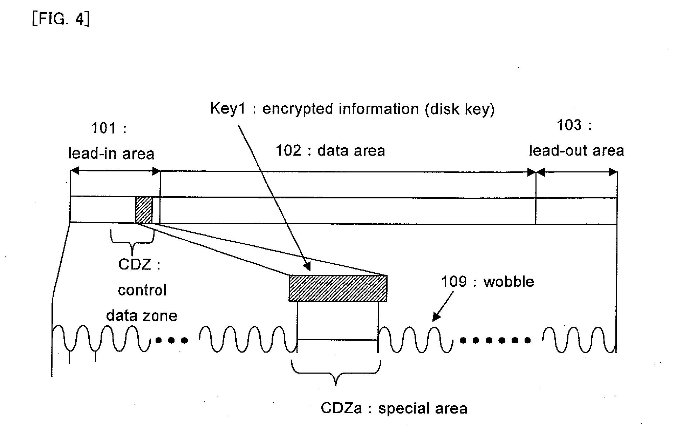

Next, with reference to FIG. 4 to FIG. 6, a more detailed explanation will be given for the specific example of the physical structure of the recording areas of the optical disc in the embodiment of the information recording medium of the present invention. FIG. 4 is a schematic conceptual view showing one specific example of the physical structure of the recording areas of the optical disc in the embodiment of the information recording medium of the present invention.

As shown in FIG. 4, particularly, in the optical disc in the embodiment, at least a portion of the control data zone CDZ in which the encryption key Key1, such as a disk key, is pre-recorded, is provided as a special area CDZa. The wobble 109 is not formed in the special area CDZa.

Therefore, the recording drive, such as a general disc drive, can hardly overwrite or cannot overwrite at all the encryption key Key1, such as a disk key, recorded in at least the special area CDZa, to record unexpected information, such as illegal encryption key. In addition, it is hardly possible or completely impossible to falsify or alter the encryption key to the unexpected information, such as the illegal encryption key, by using a general information recording apparatus. More specifically, this is because it is impossible to perform the rotation control of the disc during the recording, since the recording clock cannot be generated by using the wobble 109, the ATIP, or the land pre-pit LPP. Moreover, this is also because it is impossible to obtain the information necessary for the recording of the data, such as the recording address.

As a result, it is possible to highly maintain the confidentiality of the encryption key Key1 pre-recorded in the control data zone CDZ; namely, it is possible to set a secure condition. Thus, it is hardly possible or completely impossible to prepare or manufacture the record-type information recording medium on which the encryption key Key1 is illegally copied.

Moreover, it is possible to distinguish the legal record-type optical disc and the illegal record-type optical disc, accurately and quickly, by whether or not the wobble is detected in the special area CDZa, which is at least a portion of the control data zone CDZ, on the general information recording apparatus. More specifically, the type of the optical disc is judged by a seek operation or the like in order to obtain the control information about the reproduction or the recording, by an information recording / reproducing apparatus 200a described later. In this case, in the special area which is at least a portion of the control data zone CDZ, it is detected whether or not there is the wobble 109 peculiar to the record-type optical disc. In accordance with whether or not the wobble 109 is detected, it is possible to accurately distinguish the legal record-type optical disc and the illegal record-type optical disc. Namely, if the wobble 109 is not detected in the special area CDZa, it can be judged to be the legal record-type optical disc. On the other hand, if the wobble 109 is detected in the special area CDZa, it can be judged to be the illegal record-type optical disc.

In addition, it is also possible to partially comply with the existing rules about the reproduction or the recording of the encrypted contents, by not forming the wobble 109 in the special area CDZa which is at least a portion of the control data zone CDZ. More specifically, it is possible to partially comply with such a rule that it is not recommended to record the encryption key, such as a disk key, onto the optical disc on which the wobble is formed, i.e. the record-type optical disc; namely, it is possible to partially comply with such a rule that it is recommended to record the encryption key only onto the read-only type optical disc. Incidentally, the general information recording / reproducing apparatus 200a described later is constructed to eject the optical disc which does not comply with the existing rules.

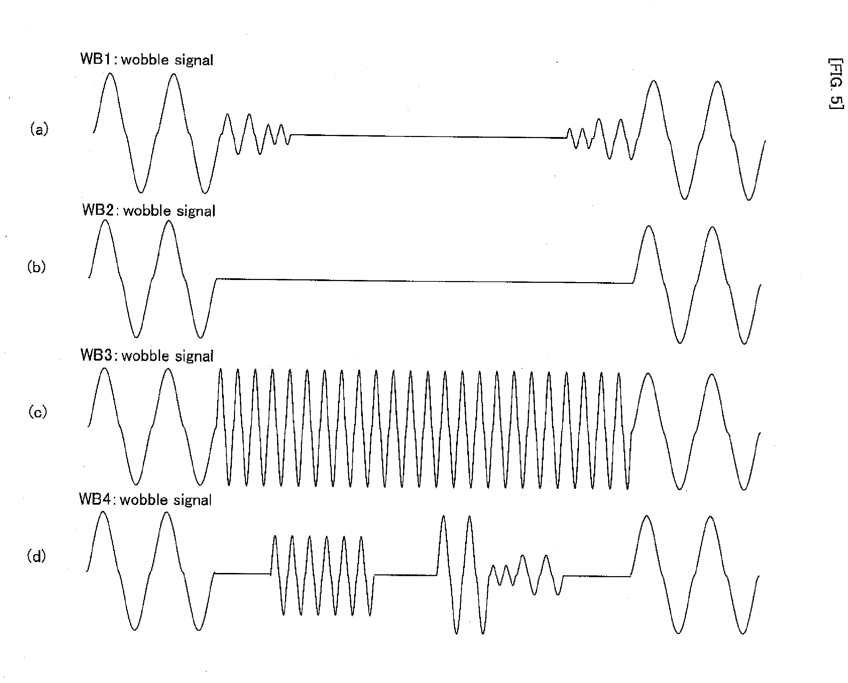

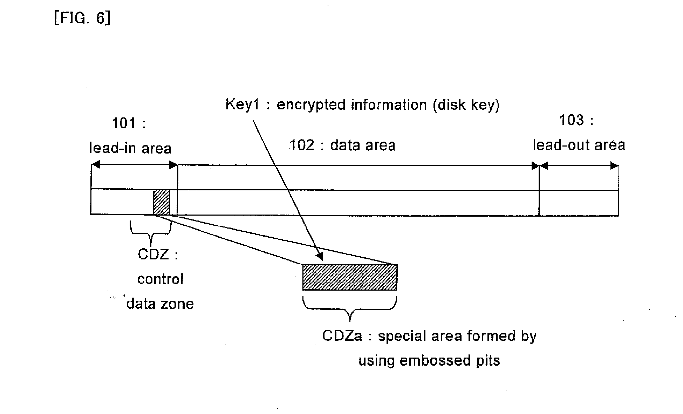

Next, with reference to FIGs. 5 and FIG. 6, an explanation will be given for another specific example of the optical disc in the embodiment of the information recording medium of the present invention. FIGs. 5 are schematic conceptual views showing wobble signals obtained from the special area, which is at least a portion of the control data zone, in another specific example of the optical disc in the embodiment of the information recording medium of the present invention. FIG. 6 is a schematic conceptual view showing another specific example of the physical structure of the recording areas of the optical disc in the embodiment of the information recording medium of the present invention.

In another specific example of the optical disc in the embodiment of the information recording medium of the present invention, the special area CDZa may be constructed so as to obtain a wobble signal WB1 shown in FIG. 5(a), from the special area CDZa which is at least a portion of the control data zone CDZ. More specifically, with the direction of the recording track as a reference, the amplitude of the wobble is reduced and amplitude-modulated (AM) on the front side of the special area CDZa. On the other hand, on the rear side of the special area CDZa, the amplitude of the wobble is increased and amplitude-modulated. In particular, it is preferable to gradually change the amplitude when the amplitude starts to decrease and increase. This is because it can realize further simplification of a manufacturing process. More specifically, a comparator of the information recording / reproducing apparatus described later cannot detect the wobble signal from a band pass filter.

In another specific example of the optical disc in the embodiment of the information recording medium of the present invention, the special area CDZa may be constructed so as to obtain a wobble signal WB2 shown in FIG. 5(b), from the special area CDZa which is at least a portion of the control data zone CDZ. More specifically, it may be constructed such that the wobble is almost or completely eliminated and that the wobble signal WB2 is not obtained in the entire special area CDZa. However, it needs higher control in the manufacturing process. Even in this specific example, as in the above-mentioned specific example, the comparator of the information recording / reproducing apparatus described later cannot detect the wobble signal from the band pass filter.

In another specific example of the optical disc in the embodiment of the information recording medium of the present invention, the special area CDZa may be constructed so as to obtain a wobble signal WB3 shown in FIG. 5(c), from the special area CDZa which is at least a portion of the control data zone CDZ. More specifically, it may be constructed such that the frequency of the wobble is modulated from 1KHz to 10KHz, for example, and is frequency-modulated (FM), in the entire special area CDZa. Incidentally, in the frequency modulation, the frequency may be increased to double or five times, or the like, or reduced to 1/2, 1/5, or the like. Even in this specific example, as in the above-mentioned specific example, the comparator of the information recording / reproducing apparatus described later cannot detect the wobble signal from the band pass filter.

In another specific example of the optical disc in the embodiment of the information recording medium of the present invention, the special area CDZa may be constructed so as to obtain a wobble signal WB4 shown in FIG. 5(d), from the special area CDZa which is at least a portion of the control data zone CDZ. More specifically, it may be constructed such that at least one of the frequency, the amplitude, and the phase of the wobble is modulated in the special area CDZa. Even in this specific example, as in the above-mentioned specific example, the comparator of the information recording / reproducing apparatus described later cannot detect the wobble signal from the band pass filter.

In another specific example of the optical disc in the embodiment of the information recording medium of the present invention, which is not illustrated, it may be constructed such that the recording track itself, such as the groove track, is not formed in advance in the special area CDZa which is at least a portion of the control data zone CDZ. Even in this specific example, as in the above-mentioned specific example, the comparator of the information recording / reproducing apparatus described later cannot detect the wobble signal from the band pass filter.

As described above, in the special area CDZa in the control data zone CDZ, the accurate recording clock and recording addresses are not obtained on the basis of the signal from the wobble by the general information recording apparatus. Thus, it is hardly possible or completely impossible to overwrite the encryption key Key1, such as a disk key, which is pre-recorded in the control data zone CDZ, to record the unexpected information, such as the illegal encryption key, or it is hardly possible or completely impossible to alter the encryption key to the unexpected information.

As shown in FIG. 6, in another specific example of the optical disc in the embodiment of the information recording medium of the present invention, it may be constructed such that pre-record data, which is a predetermined data row of the encryption key Key1, such as a disk key, is formed as an embossed pit row in the special area CDZa which is at least a portion of the control data zone CDZ..

As described above, in the special area CDZa in which at least this embossed pit row is formed, it is hardly possible or completely impossible to overwrite the unexpected information, such as the illegal encryption key, or it is hardly possible or completely impossible to alter the encryption key to the unexpected information.

### (Entire Structure of Distribution System provided with Information Recording Medium, Information Recording Apparatus, and Information Distributing Apparatus)

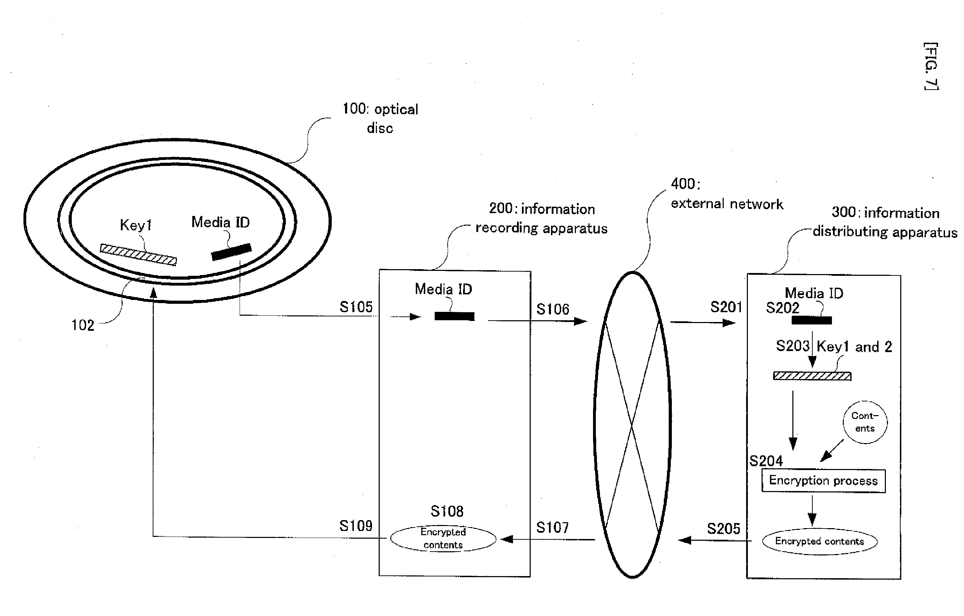

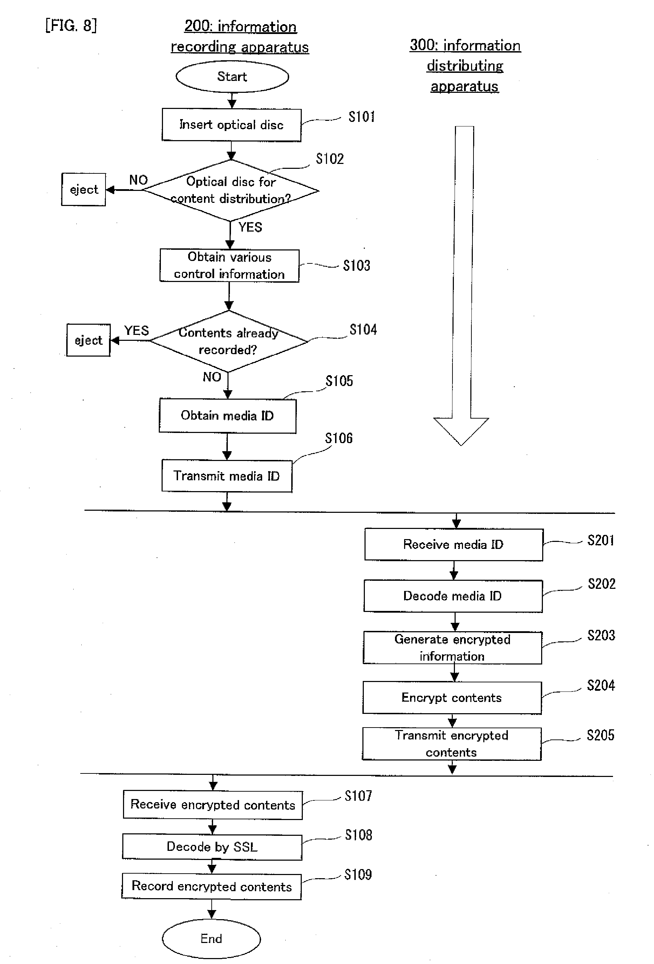

Next, with reference to FIG. 7, an explanation will be given for the entire structure of a distribution system, provided with: an information recording apparatus for performing a recording operation on the information recording medium of the present invention; and an in information distributing apparatus for performing a distribution operation. FIG. 7 is a block diagram showing the entire structure of the distribution system, provided with: the information recording apparatus for performing a recording operation on the information recording medium of the present invention; and the information distributing apparatus for performing a distribution operation. Incidentally, step numbers in FIG. 7 correspond to those in FIG. 8 described later. Moreover, in the distribution system in the embodiment, a DAO (Disk At Once) method may be adopted.

As shown in FIG. 7, the distribution system in the embodiment is provided with: (i) an information recording apparatus 200 for performing a recording operation on the optical disc 100; (ii) an information distributing apparatus 300, such as a web server, for distributing encrypted contents to the information recording apparatus 200; and (iii) an external network 400, such as the Internet, for allowing information to be exchanged between the information recording apparatus 200 and the information distributing apparatus 300.

As described above, the optical disc 100 is provided with: the NBCA; the control data zone CDZ; and the data area 102 in which the encrypted contents are recorded. More specifically, in the NBCA, there is recorded the media ID by laser cutting. In the control data zone CDZ, there is recorded the encryption key Key1, such as a disk key. In the data area 102, there are recorded the encrypted contents or the like distributed by the information distributing apparatus 300 described later, as it is.

The information recording apparatus 200 transmits the media ID of the optical disc 100 to the information distributing apparatus 300. Moreover, it records the encrypted contents received from the information distributing apparatus 300, onto the optical disc 100.

The information distributing apparatus 300 receives the media ID transmitted by the information recording apparatus 200. It generates the encryption key Key1, such as a disk key, corresponding to the received media ID, and the encryption key Key2, such as a title key. On the basis of the generated encryption key Key 1 and Key2, the information distributing apparatus 300 performs an encryption process, such as encryption, on the contents. Then, it distributes the contents on which the encryption process is performed, i.e. the encrypted contents, to the information recording apparatus 200. Incidentally, the encrypted contents are distributed via the external network 400, so that encryption corresponding to eavesdropping and alternation or the like, such as a SSL (Secure Socket Layer), may be performed, aside from the encryption in the encryption process.

The external network 400 connects the information recording apparatus 200 and the information distributing apparatus 300 so as to exchange the information, through a not-illustrated line connecting apparatus provided for the both apparatuses (e.g. a hub apparatus, a digital service unit (DSU), or a router with firewall application for preventing invasion mounted thereon).

### (Distribution Process on Information Recording Medium, Information Recording Apparatus, and Information Distributing Apparatus)

Next, with reference to the above-mentioned FIG. 7 in addition to FIG. 8, an explanation will be given for a distribution process of the distribution system, provided with: the information recording apparatus for performing the recording operation on the information recording medium of the present invention; and the information distributing apparatus for performing the distribution operation. FIG. 8 is a flowchart showing the distribution process on the information recording medium, the information recording apparatus, and the information distributing apparatus of the present invention. Incidentally, the step numbers in FIG. 8 correspond to those in FIG. 7.

### (Operation on Information Recording Apparatus)

Firstly, in FIG. 8, if the optical disc 100 is inserted, the seek operation is performed by an optical pickup 202 under the control of a CPU (Central Processing Unit) 250 of the information recording apparatus described later (step S101).

Then, under the control of the CPU 250, it is judged whether or not the optical disc 100 is an optical disc for distributing contents thereto (step S102). Here, if the optical disc 100 is the optical disc for distributing contents thereto (the step S102: Yes), various control information and various management information necessary for the recording operation onto the optical disc 100 are obtained (step S103). More specifically, an OPC process is performed, to thereby determine an optimum recording power and determine a recording strategy pattern.

Then, it is judged whether or not the contents are already recorded on the optical disc 100 (step S104). Here, if the contents are not recorded yet on the optical disc 100 (the step S104: No), the media ID peculiar to the optical disc 100 is obtained from the NBCA (Narrow Burst Cutting Area) on the optical disc 100 under the control of the CPU 250 (step S105).

Then, under the control of the CPU 250, the obtained media ID is encrypted on the basis of the SSL or the like, and transmitted to the information distributing apparatus 300, such as a server on the network, for example (step S106).

On the other hand, as a result of the judgment in the step S102, if it is judged that the optical disc 100 is not the optical disc for distributing contents thereto (the step S102: No), and as a result of the judgment in the step S104, if it is judged that the contents are already recorded on the optical disc 100 (the step S104: Yes), the optical disc 100 is ejected from the information recording apparatus 200.

### (Operation on Information Distributing Apparatus)

On the information distributing apparatus 300, firstly the media ID encrypted by the SSL or the like is received (step S201).

Then, on the information distributing apparatus 300, the received media ID encrypted by the SSL or the like is decoded (step S202).

Then, on the information distributing apparatus 300, the encryption key Key 1, such as a disk key, corresponding to the decoded media ID, and the encryption key Key 2, such as a title key, are generated (step S203).

Then, on the information distributing apparatus 300, contents and a file system distributed by using the generated encryption key Key 1 and Key2 are encrypted in the predetermined encryption system (step S204).

Then, on the information distributing apparatus 300, the encrypted contents and file system, encrypted on the basis of the encryption system by using the generated encryption key Key 1 and Key2, are further encrypted by the SSL or the like, and distributed to the information recording apparatus 200 (step S205). More specifically, the attribute of the encrypted contents and file system encrypted by the SSL or the like, i.e. CCI (Copy Control Information), is set to the attribute of Never Copy so as not to be reproduced, in the middle of the distribution.

### (Operation on Information Recording Apparatus - continued-)

Again, on the information recording apparatus 200, the encrypted contents and file system, encrypted by the SSL or the like and distributed by the information distributing apparatus, are received (step S107).

Then, on the information recording apparatus 200, the received encrypted contents and file system are decoded by the SSL or the like (step S108).

Then, on the information recording apparatus 200, the encrypted contents and file system encrypted by the SSL or the like by using the encryption key Key 1 and Key2, are not decoded and recorded onto the optical disc 100 as they are (step S109). More specifically, the recording of the encrypted contents and file system encrypted on the basis of the predetermined encryption system, is started from the address of the last recording area of the lead-in area 101 which is not pre-recorded, and it is ended at the address of the recording area of the lead-out area 103 which is pre-recorded. If the recording of the encrypted contents and file system is not performed up to the address of the recording area of the lead-out area 103 which is pre-recorded, buffer data may be recorded up to this address. Incidentally, in the lead-in area 101 and the lead-out area 103 or the like, buffer data may be written in advance and sold, or buffer data may be newly written in the recording of the encrypted contents by the information recording apparatus 200.

As described above, the distribution system in the embodiment transmits and receives the media ID, instead of the encryption key Key 1 and Key2, in exchanging the information through the external network 400 between the information recording apparatus 200 and the information distributing apparatus 300. Therefore, it is possible to highly maintain the confidentiality of the encryption key Key1 pre-recorded in the encryption key recording area; namely, it is possible to set a secure condition. Thus, it is hardly possible or completely impossible to prepare or manufacture the record-type information recording medium on which the encryption key Key1 is illegally copied.

### (Information Recording / Reproducing Apparatus)

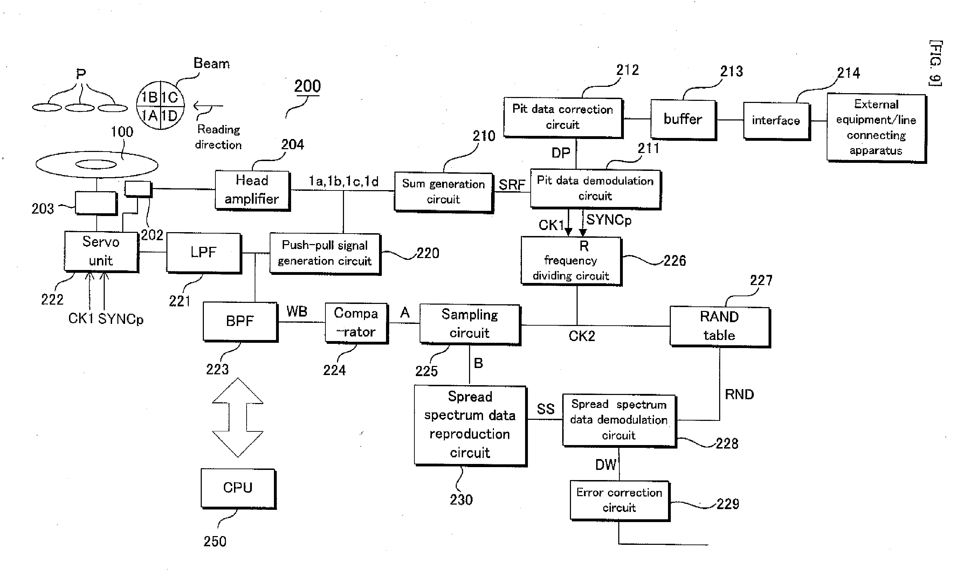

Next, an explanation will be given for the information recording / reproducing apparatus for recording / reproducing information on the information recording medium of the present invention. The information recording / reproducing apparatus 200a includes the above-mentioned information recording apparatus 200. FIG. 9 is a block diagram showing the entire structure of the information recording / reproducing apparatus for recording / reproducing information on the information recording medium of the present invention. On the optical disc 100, pit data DP synchronized with a first clock signal CK1 is recorded in accordance with the length of a record mark. The record mark in this example is a pit, and the track is constructed from a pit row. The track has a meandering shape in accordance with a wobble signal WB obtained by the spread spectrum modulation of wobble data DW. The wobble signal WB is synchronized with a second clock signal CK2. The first clock signal CK1 has a frequency which is N times (N is a natural number) as much as that of the second clock signal CK2. In this example, N=25, the second clock signal CK2 is 420KHz, and the first clock signal CK1 is 10.5MHz.

The information recording / reproducing apparatus 200a is provided with: an optical pickup 202 for irradiating a reproduction beam onto the optical disc 100 and outputting a signal responding to reflected light; a spindle motor 203 for controlling the rotation of the optical disc 100; and a servo unit 222. The first clock signal CK1 and a pit synchronization signal SYNCp are supplied to the servo unit 222. The servo unit 222 is synchronized with these signals, and performs spindle servo for controlling the rotation of the spindle motor 203, and focus servo and tracking servo for performing relative position control of the optical pickup 202 to the optical disc 100.

The optical pickup 202 is provided with a laser diode for irradiating the reproduction beam; and a four-division detection circuit (not-illustrated). The four-division detection circuit divides the reflected light of the reproduction beam into four areas 1A, 1B, 1C, and 1D shown in FIG. 9, and outputs each signal corresponding to the quantity of light in respective one of the areas. A head amplifier 204 amplifies each output signal of the optical pickup 202, and outputs a divisional read signal 1a corresponding to the area 1A, a divisional read signal 1b corresponding to the area 1B, a divisional read signal 1c corresponding to the area 1C, and a divisional read signal 1d corresponding to the area 1D. Incidentally, the optical pickup 202 and the head amplifier 204 correspond to the optical pickup device of the present invention.

A sum generation circuit 210 is provided with an adder circuit for adding the divisional read signals 1a, 1b, 1c, and 1d and for outputting a sum read signal SRF. Incidentally, the sum read signal SRF is a signal which represents the length of the record mark.

A pit data demodulation circuit 211 reproduces the pit data DP on the basis of the sum read signal SRF, and generates the first clock signal CK1. More specifically, the reproduced pit data DP is demodulated by using a predetermined table, to thereby generate reproduction data. For example, if EFM modulation is adopted as a modulating method, a process of converting 14-bit pit data DP to 8-bit reproduction data is performed. Then, a descramble process is performed in which the order of the reproduction data is rearranged in accordance with a predetermined rule, and the processed reproduction data is outputted.

The reproduction data obtained in this manner is supplied to a pit data correction circuit 212 shown in FIG. 9, on which an error correction process and an interpolation process are performed, and then, it is stored into a buffer 213. An interface 214 sequentially reads the data stored in the buffer 213, converts it in a predetermined output format, and outputs it to external equipment. Moreover, through this interface 214, the various data is inputted and outputted to the above-mentioned line connecting apparatus connected to the external network 400, for example.

A push-pull signal generation circuit 220 calculates (1a + 1d) - (1b + 1c) and generates a push-pull signal. The component (1a + 1d) corresponds to the areas 1A and 1D which are on the left side with respect to the reading direction, while the component (1b + 1c) corresponds to the areas 1B and 1C which are on the right side with respect to the reading direction. Namely, if the reproduction beam is disproportionately on the left with respect to the pit, the push-pull signal is positive on the basis of the center of amplitude. If the reproduction beam is located in the center of the pit, the value of the push-pull signal is in the center of amplitude. If the reproduction beam is disproportionately on the right with respect to the pit, the push-pull signal is negative on the basis of the center of amplitude. The relative position of the reproduction beam and the pit varies depending on the meandering of the track, and the value of the push-pull signal indicates a relative position relationship between the reproduction beam and the pit.

The push-pull signal is outputted to the servo unit 222 through a low pass filter 221. The servo unit 222 performs the tracking control on the basis of the push-pull signal. Moreover, the push-pull signal is supplied to a band pass filter 223. The passband of the band pass filter 223 is set to extract the wobble signal WB obtained by the spread spectrum modulation of the wobble data DW from the push-pull signal at the time of recording. Therefore, the band pass filter 223 constitutes the above-mentioned detecting device, together with the push-pull signal generation circuit 220, and its output signal is obtained by reproducing the wobble signal WB from the optical disc 100. In particular, on a comparator 224, if it is tried to perform the illegal writing into the encryption key recording area, the recording clock and the recording address cannot be detected in the special area of the present invention, so that errors occur in the recording operation, and the recording operation is stopped. Thus, it is possible to prevent the illegal writing into the encryption key recording area, regardless of the specification of the information recording apparatus and its recording control procedure. Namely, it is possible to make PLL (Phase Lock Loop) out of control.

A spread spectrum data reproduction circuit 230 reproduces spread spectrum data SS, on the basis of data B. The details of the spread spectrum data reproduction circuit 230 vary depending on which modulation method is used in preparing a disc master DS.

A randomization pattern used for the spread spectrum modulation at the time of recording is stored on a RAND table 220. The randomization pattern corresponds to a spread code, and it is a bit row generated by using a random function. The second clock signal CK2 is supplied to the RAND table 227, and the randomization pattern is read in synchronization with the second clock signal CK2. By this, random data RND is generated, and the generated random data RND is supplied to a spread spectrum demodulation circuit 228. Moreover, the spread spectrum data SS outputted from the spread spectrum data reproduction circuit 230 is supplied to the spread spectrum demodulation circuit 228.

The spread spectrum demodulation circuit 228 is provided with a multiplier circuit (e.g. exclusive OR circuit XOR), and reproduces the wobble data DW by multiplying the spread spectrum data SS and the random data RND. At this time, the signal which is not in the original signal band, is converted to an out-of-band signal by the multiplication. The wobble data DW reproduced in this manner is error-corrected on an error correction circuit 229 and then outputted.

The CPU 250 controls each of the constitutional elements of the information recording / reproducing apparatus 200a.

### (Flow of Reproduction Operation by Embodiment of Information Recording / Reproducing Apparatus)

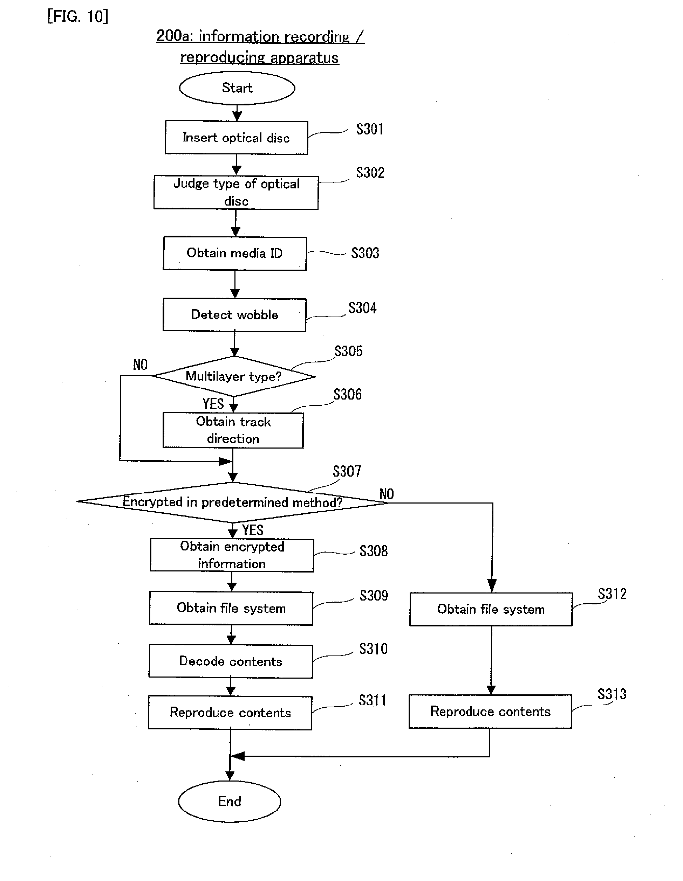

Next, with reference to FIG.10, an explanation will be given for a reproduction operation in an embodiment of the information reproducing / reproducing apparatus for reproducing / reproducing information on the information recording medium of the present invention. FIG. 10 is a flowchart showing a flow of the reproduction operation in one specific example of the embodiment of the information reproducing apparatus of the present invention.

Firstly, in FIG. 10, if the optical disc 100 is inserted, the seek operation is performed by the optical pickup 202 under the control of the CPU 250 (step S301).

Then, under the control of the CPU 250, the type of the optical disc 100 is judged (step S302).

### Then, under the control of the CPU 250, the media ID is obtained (step S303).

Then, under the control of the CPU 250, information about whether or not the optical disc 100 is the record-type information recording medium is obtained (step S304). More specifically, by judging whether or not the wobble or the like can be detected, it is possible to judge whether or not the optical disc 100 is the record-type information recording medium.

Then, under the control of the CPU 250, information about the number of recording layers of the optical disc 100 is obtained, and it is judged whether or not the optical disc 100 is a multilayer type information recording medium (step S305). Namely, under the control of the CPU 250, it is possible to judge whether or not the optical disc 100 is a single layer type or a multilayer type information recording medium, such as a dual-layer type. Here, if it is judged that the optical disc 100 is the multilayer type information recording medium, such as the dual-layer type (the step S305: Yes), information about the direction of the recording track of the optical disc 100 is obtained under the control of the CPU 250 (step S306). More specifically, it is possible to judge whether the optical disc 100 adopts a parallel method or an opposite method.

On the other hand, if it is judged that the optical disc 100 is not the multilayer type information recording medium, such as the dual-layer type (the step S305: No), the optical disc 100 is the single layer type information recording medium. Thus, the step S306 of obtaining the information about the direction of the recording track of the optical disc 100 is omitted.

Then, under the control of the CPU 250, it is judged whether or not the contents and the file system recorded in a user data area, for example, of the optical disc 100 are encrypted on the basis of the predetermine encryption system (step S307). Here, for example, if the contents recorded in the data area 102 of the optical disc 100 are encrypted on the basis of the encryption system (the step S307: Yes), the encryption key Key2, such as a title key, is obtained (step 5308).

Then, under the control of the CPU 250, information about the file system of the optical disc 100 is obtained (step S309).

Then, under the control of the CPU 250, the contents encrypted and recorded on the optical disc 100 are decoded by using the obtained encryption key Key2, such as a title key, for example (step S310).

As descried above, under the control of the CPU 250, the reproduction is performed for each decoded content, by using the encryption key Key2, such as a title key, for example (step S311).

On the other hand, if the contents recorded in the user data area, for example, of the optical disc 100 are not encrypted on the basis of the encryption system (the step S307: No), the information about the file system is obtained under the control of the CPU 250 (step S312).

As described above, the contents are reproduced under the control of the CPU 250 (step S313).

In the embodiment, as one specific example of the information recording medium, a rewritable type optical disc, such as a CD-R/W or a DVD-R/W, for example, is explained. The present invention, however, can be also applied to an optical information recording medium, such as all types of CDs and DVDs which use the wobble, and a large-volume recording medium like a Blu-ray disc, for example.

The present invention is not limited to the above-described embodiment, and various changes may be made, if desired, without departing from the essence or spirit of the invention which can be read from the claims and the entire specification. An information recording medium which involves such changes, is also intended to be within the technical scope of the present invention.

### Industrial Applicability

The information recording medium of the present invention can be applied to an information recording medium, such as a DVD.

## Claims

1. An information recording medium, comprising:
a record information recording area in which record information can be recorded; and
an encryption information recording area in which encryption information for encrypting the record information is pre-recorded in advance,
the encryption information recording area including a special area having a physical structure different from that of the record information recording area, in at least a portion of the encryption information recording area.

2. The information recording medium according to claim 1, wherein
wobble is formed in the record information recording area by that a recording track to record thereon the record information meanders, and
wobble is not formed in the special area by that a recording track to record thereon the encryption information does not meander.

3. The information recording medium according to claim 1, wherein
first wobble is formed in the record information recording area by that a recording track to record thereon the record information meanders, and
second wobble in which at least one of frequency, amplitude, and phase is different from those of the first wobble formed in the record information recording area, is formed in the special area by that a recording track to record thereon the encryption information meanders.

4. The information recording medium according to claim 1, wherein
wobble is formed in the record information recording area by that a recording track to record thereon the record information meanders, and
the encryption information is recorded in the special area by using embossed pits.

5. The information recording medium according to claim 4, wherein
a land track and a groove track are alternately formed in the record information recording area as the recording track, and land pre-pits carrying predetermined types of pre-information are formed in advance on the land track, and
the land pre-pits are not recorded in the special area.

6. The information recording medium according to claim 5, wherein the land track and the groove track are formed in the special area.

7. The information recording medium according to claim 4, wherein
a land track and a groove track are alternately formed in the record information recording area as the recording track, and
the land track and the groove track are not formed in the special area.

8. The information recording medium according to claim 1, wherein the encryption information recording area is all constructed from the special area.

9. The information recording medium according to claim 1, further comprising a control information recording area in which control information about control of reproduction and recording can be recorded,
at least one of start address information and end address information being recorded in the control information recording area, the start address information indicating a start position of the special area, the end address information indicating an end position of the special area.

10. The information recording medium according to claim 1, wherein
pre-format address information is recorded in at least one of the record information recording area and the encryption information recording area, and
at least one of start address information and end address information is appended to the pre-format address information, the start address information indicating a start position of the special area, the end address information indicating an end position of the special area.

11. The information recording medium according to claim 1, wherein
the encryption information is information for further encrypting another encryption information which is to encrypt the record information, and
the another encryption information is recorded into the record information recording area together with the record information.
